# EUROPEAN PATENT APPLICATION

(11) **EP 4 832 138 A1**
(43) Date of publication of application: **28.10.2026**
(21) Application number: 24910894.5
(22) Date of filing: 18.12.2024
(51) Int. Cl.: H01M 10/0569

(54) **SODIUM-ION BATTERY AND ELECTRIC DEVICE**

(30) Priority: 29.12.2023 CN 202311865528
(71) Applicant: Huawei Technologies Co., Ltd., Shenzhen, Guangdong 518129 (CN)
(72) Inventor: MA, Qiang, Shenzhen, Guangdong 518129 (CN); ZHANG, Yezheng, Shenzhen, Guangdong 518129 (CN); WANG, Bo, Shenzhen, Guangdong 518129 (CN); YAN, Ruiting, Shenzhen, Guangdong 518129 (CN); HOU, Tianhong, Shenzhen, Guangdong 518129 (CN); XU, Xiaodong, Shenzhen, Guangdong 518129 (CN)
(74) Representative: Huawei European IPR
(86) International application number: PCT/CN2024/140322
(87) International publication number: WO 2025/139963

(57) **Abstract**

A sodium-ion battery and a power-consuming device are provided. The sodium-ion battery includes a positive electrode, a negative electrode, a separator, and an electrolyte. The electrolyte includes a cyclic carbonate solvent and/or a carboxylic ester solvent. A numerical ratio of a mass fraction of the cyclic carbonate solvent in the electrolyte to a sum of a D50 particle size of a positive electrode active material and a D50 particle size of a negative electrode active material is 0.005:1 to 0.2:1. A numerical ratio of a mass fraction of the carboxylic ester solvent in the electrolyte to the sum of the D50 particle size of the positive electrode active material and the D50 particle size of the negative electrode active material is 0.002:1 to 0.1:1. A unit of the D50 particle sizes is ¡.tm. With a proper design of a specific association relationship between the D50 particle sizes of the positive and negative electrode active materials and the electrolyte solvent, the sodium-ion battery can effectively balance ion transport and ion diffusion capabilities in battery charging and discharging processes, and improve low-temperature kinetics of the battery while also considering high-temperature performance.

## Description

This application claims priority to Chinese Patent Application No. 202311865528.0, filed with the China National Intellectual Property Administration on December 29, 2023 and entitled "SODIUM-ION BATTERY AND POWER-CONSUMING DEVICE", which is incorporated herein by reference in its entirety.

### TECHNICAL FIELD

Embodiments of this application relate to the field of battery technologies, and in particular, to a sodium-ion battery and a power-consuming device.

### BACKGROUND

With the shortage and uneven distribution of lithium resources, sodium-ion batteries are considered as potential candidates in energy storage scenarios due to their advantages such as abundant sodium resources and low costs. Low-temperature characteristics are key advantages enabling sodium-ion batteries to build a differentiated competitive edge. However, currently, sodium-ion batteries exhibit poor low-temperature charging kinetics and are prone to sodium plating, causing severe side reactions and poor cycling performance. This has become a bottleneck hindering development of a differentiated competitive strategy for sodium-ion batteries. Electrolytes, positive and negative electrode materials, and the like all affect low-temperature performance of sodium-ion batteries. However, it is still unclear how to design an association relationship between an electrolyte and positive and negative electrode materials to better exploit low-temperature characteristics of the sodium-ion batteries while also considering high-temperature performance. Therefore, it is necessary to clarify a structure-property relationship between the electrolyte and the positive and negative electrode materials.

### SUMMARY

In view of this, embodiments of this application provide a sodium-ion battery and a power-consuming device. With a proper design of a specific association relationship between D50 particle sizes of positive and negative electrode active materials and an electrolyte solvent, the sodium-ion battery can effectively balance ion transport and ion diffusion capabilities in battery charging and discharging processes, and improve low-temperature kinetics of the battery while also considering high-temperature performance.

A first aspect of embodiments of this application provides a sodium-ion battery, where the sodium-ion battery includes a positive electrode, a negative electrode, and a separator and an electrolyte that are located between the positive electrode and the negative electrode, the electrolyte includes an electrolyte salt and an organic solvent, and the organic solvent includes a cyclic carbonate solvent and/or a carboxylic ester solvent; the positive electrode includes a positive electrode active material; and the negative electrode includes a negative electrode active material;
a numerical ratio of a mass fraction of the cyclic carbonate solvent in the electrolyte to a sum of a D50 particle size of the positive electrode active material and a D50 particle size of the negative electrode active material is 0.005:1 to 0.2:1; and
a numerical ratio of a mass fraction of the carboxylic ester solvent in the electrolyte to the sum of the D50 particle size of the positive electrode active material and the D50 particle size of the negative electrode active material is 0.002:1 to 0.1:1, where a unit of the D50 particle sizes is µm.

According to the sodium-ion battery provided in embodiments of this application, an association relationship is established between the D50 particle sizes of the positive and negative electrode active materials and the electrolyte solvent, and the numerical ratio of the mass fraction of the cyclic carbonate solvent in the electrolyte to the sum of the D50 particle size of the positive electrode active material and the D50 particle size of the negative electrode active material is controlled within an appropriate specific range, and the numerical ratio of the mass fraction of the carboxylic ester solvent in the electrolyte to the sum of the D50 particle size of the positive electrode active material and the D50 particle size of the negative electrode active material is controlled within an appropriate specific range. In this way, physical properties such as viscosity and conductivity of the electrolyte can be properly controlled, ion transport and ion diffusion capabilities in battery charging and discharging processes can be effectively balanced, and low-temperature kinetics of the positive and negative electrode active materials can be improved while high-temperature performance is also considered, thereby obtaining a sodium-ion battery with both good low-temperature performance and excellent high-temperature performance.

The D50 particle size is a particle size corresponding to a point at which a cumulative particle size distribution percentage of a sample reaches 50%. D50 is also referred to as a median diameter or a median particle size.

In an implementation of this application, the numerical ratio of the mass fraction of the cyclic carbonate solvent in the electrolyte to the sum of the D50 particle size of the positive electrode active material and the D50 particle size of the negative electrode active material is 0.01:1 to 0.1:1. The numerical ratio of the mass fraction of the cyclic carbonate solvent in the electrolyte to the sum of the D50 particle size of the positive electrode active material and the D50 particle size of the negative electrode active material is controlled within an appropriate range, so that the cyclic carbonate solvent can be used to improve low-temperature performance while better considering high-temperature performance of the battery. In this way, the electrolyte as a whole has appropriate conductivity and obtains a strong ion transport capability.

In an implementation of this application, the numerical ratio of the mass fraction of the carboxylic ester solvent in the electrolyte to the sum of the D50 particle size of the positive electrode active material and the D50 particle size of the negative electrode active material is 0.005:1 to 0.05:1. The numerical ratio of the mass fraction of the carboxylic ester solvent in the electrolyte to the sum of the D50 particle size of the positive electrode active material and the D50 particle size of the negative electrode active material is controlled within an appropriate range, so that the carboxylic ester solvent can be used to improve low-temperature performance while better considering high-temperature performance of the battery. In this way, the electrolyte as a whole has appropriate viscosity and obtains a fast ion transport capability.

In an implementation of this application, the cyclic carbonate solvent includes one or more of ethylene carbonate and propylene carbonate; and a mass percentage of the cyclic carbonate solvent in the electrolyte is 10% to 40%. Addition of an appropriate amount of the cyclic carbonate solvent to the electrolyte helps leverage advantages of the cyclic carbonate solvent to improve the low-temperature performance of the battery, and also enables the cyclic carbonate solvent to cooperate with another solvent to better improve comprehensive performance of the battery.

In an implementation of this application, a mass percentage of the ethylene carbonate in the electrolyte is 0% to 20%, and a mass percentage of the propylene carbonate in the electrolyte is 10% to 40%.

In an implementation of this application, the carboxylic ester solvent includes one or more of methyl formate, ethyl formate, methyl acetate, ethyl acetate, propyl acetate, ethyl propionate, propyl propionate, methyl difluoroacetate, and methyl trifluoroacetate; and a mass percentage of the carboxylic ester solvent in the electrolyte is 5% to 25%.

In an implementation of this application, the D50 particle size of the positive electrode active material is 0.7 µm to 20 µm. An appropriate particle size helps improve electrochemical performance of the battery.

In an implementation of this application, the D50 particle size of the negative electrode active material is 0.7 µm to 20 µm. An appropriate particle size helps improve electrochemical performance of the battery.

In an implementation of this application, the organic solvent further includes a linear carbonate solvent. Addition of the linear carbonate solvent helps reduce the viscosity of the electrolyte and improve the ion transport capability of the electrolyte.

In an implementation of this application, a mass percentage of the linear carbonate solvent in the electrolyte is 20% to 50%. Addition of an appropriate amount of the linear carbonate solvent helps the electrolyte obtain appropriate viscosity, and enables the linear carbonate solvent to better improve comprehensive performance of the electrolyte together with another solvent such as the cyclic carbonate solvent or the carboxylic ester solvent.

In an implementation of this application, the linear carbonate solvent includes one or more of diethyl carbonate, ethyl methyl carbonate, and dimethyl carbonate; and a mass percentage of the diethyl carbonate in the electrolyte is 0% to 40%, a mass percentage of the ethyl methyl carbonate in the electrolyte is 0% to 40%, and a mass percentage of the dimethyl carbonate in the electrolyte is 0% to 20%.

In an implementation of this application, the organic solvent further includes an ether solvent, and a mass percentage of the ether solvent in the electrolyte is less than or equal to 20%. A stable solvation structure of the ether solvent can implement a highly reversible solvent-co-intercalation reaction, and form a thin and stable SEI film (Solid Electrolyte Interphase, solid electrolyte interphase film). This is conducive to stable electrode cycling and fast sodium storage kinetics.

In an implementation of this application, the ether solvent includes one or more of tetrahydrofuran, 2-methyltetrahydrofuran, 1,3-dioxolane, dimethoxymethane, 1,2-dimethoxyethane, diethylene glycol dimethyl ether, 1,1,2,2-tetrafluoroethyl-2,2,3,3-tetrafluoropropyl ether, and bis(2,2,2-trifluoroethyl) ether.

In an implementation of this application, the electrolyte further includes an additive, and the additive includes at least one of a sodium salt additive and an organic additive; a mass percentage of the sodium salt additive in the electrolyte is 0.05% to 3%; and a mass percentage of the organic additive in the electrolyte is 0.1% to 15%. Addition of the sodium salt additive can improve film formation quality of the SEI film of the negative electrode, and reduce contact between the negative electrode and the electrolyte. Addition of the organic additive helps form a layer of quality SEI film on a surface of the negative electrode of the sodium-ion battery, thereby effectively protecting the negative electrode and ensuring uniform and rapid migration of sodium ions on an interface. Addition of appropriate amounts of the sodium salt additive and the organic additive to the electrolyte helps better improve the comprehensive performance of the battery.

In an implementation of this application, the sodium salt additive includes one or more of sodium bis(oxalato)borate (NaBOB), sodium difluoro(oxalato)borate (NaDFOB), sodium difluorobis(oxalato)phosphate (NaDFOP), and sodium difluorophosphate (NaPO₂F₂); and the organic additive includes one or more of a sulfur-containing ester compound, a fluorinated carbonate compound, a nitrile compound, and an acid anhydride compound.

In an implementation of this application, a mass percentage of the sulfur-containing ester compound in the electrolyte is 0.5% to 5%; a mass percentage of the fluorinated carbonate compound in the electrolyte is 0.5% to 5%; a mass percentage of the nitrile compound in the electrolyte is 0.5% to 5%; and a mass percentage of the acid anhydride compound in the electrolyte is 0.05% to 1%.

In an implementation of this application, the sulfur-containing ester compound includes one or more of dimethyl sulfite, diethyl sulfite, ethylene sulfite, ethylene sulfate, propylene sulfate, methylene methanedisulfonate, 1,3-propane sultone, 1,3-propene sultone, 1,4-butane sultone, dimethyl sulfate, diethyl sulfate, and 4-methyl ethylene sulfate; the fluorinated carbonate compound includes one or more of fluoroethylene carbonate and difluoroethylene carbonate; the nitrile compound includes a mononitrile compound and/or a polynitrile compound; the mononitrile compound includes at least one of acetonitrile and p-methylbenzonitrile; the polynitrile compound includes one or more of succinonitrile, glutaronitrile, adiponitrile, 1,2-bis(2-cyanoethoxy)ethane, 1,3,6-hexanetricarbonitrile, and 1,4-dicyano-2-butene; and the acid anhydride compound includes one or more of succinic anhydride, glutaric anhydride, adipic anhydride, maleic anhydride, cyclic phosphate anhydride, and 1-butyl phosphate anhydride.

In an implementation of this application, in the electrolyte, a molar concentration of the electrolyte salt is 0.05 mol/L to 5 mol/L; and the electrolyte salt includes one or more of NaClO₄, NaBF₄, NaPF₆, NaAsF₆, NaCF₃SO₃, sodium 4,5-dicyano-2-(trifluoromethyl)imidazolate (NaTDI), Na[(CF₃SO₂)₂N], Na[(FSO₂)₂N], and Na[(CₘF₂ₘ₊₁SO₂)(CₙF₂ₙ₊₁SO₂)N], where m and n are natural numbers.

In an implementation of this application, the positive electrode active material includes at least one of a layered sodium transition metal oxide, a Prussian blue (white) compound, and a sodium polyanionic compound.

In an implementation of this application, the negative electrode active material includes at least one of natural graphite, artificial graphite, mesocarbon microbeads, hard carbon, soft carbon, and a porous carbon material.

The sodium-ion battery provided in embodiments of this application may be used in a terminal device, for example, which may be a consumer electronic product like as a mobile phone, a tablet computer, a mobile power supply, a portable computer, a notebook computer, or another wearable or movable electronic device, or may be a device product like a vehicle, an energy storage device, or a base station, to improve product safety and reliability.

A second aspect of embodiments of this application provides a preparation method for a sodium-ion battery, including:
providing a positive electrode plate, a negative electrode plate, a separator, and an electrolyte, where the positive electrode plate includes a positive electrode active material, the negative electrode plate includes a negative electrode active material, the electrolyte includes an electrolyte salt and an organic solvent, and the organic solvent includes a cyclic carbonate solvent and/or a carboxylic ester solvent; where
a numerical ratio of a mass fraction of the cyclic carbonate solvent in the electrolyte to a sum of a D50 particle size of the positive electrode active material and a D50 particle size of the negative electrode active material is controlled to be 0.005:1 to 0.2:1; and
a numerical ratio of a mass fraction of the carboxylic ester solvent in the electrolyte to the sum of the D50 particle size of the positive electrode active material and the D50 particle size of the negative electrode active material is controlled to be 0.002:1 to 0.1:1, where a unit of the D50 particle sizes is µm; and
assembling the positive electrode plate, the negative electrode plate, the separator, and the electrolyte to obtain a sodium-ion battery.

According to the preparation method for a sodium-ion battery provided in embodiments of this application, with a proper design of a specific association relationship between the D50 particle sizes of the positive and negative electrode active materials and the electrolyte solvent, ion transport and ion diffusion capabilities in battery charging and discharging processes can be effectively balanced, and low-temperature kinetics of the battery can be improved while high-temperature performance is also considered, thereby enhancing battery cycling and improving high-temperature storage performance and low-temperature charging performance.

An embodiment of this application further provides a power-consuming device. The power-consuming device includes a housing, and an electronic component and a battery that are accommodated in the housing, the battery supplies power to the electronic component, and the battery includes the sodium-ion battery according to the first aspect or the sodium-ion battery prepared by using the preparation method according to the second aspect.

### BRIEF DESCRIPTION OF DRAWINGS

FIG. 1 is a diagram of a structure of a sodium-ion battery 100 according to an embodiment of this application;
FIG. 2 is a diagram of a structure of a power-consuming device 200 according to an embodiment of this application; and
FIG. 3 is a diagram of cycling performance comparison between sodium-ion batteries in Example 5 and Comparative Examples 1 and 2 of this application.

### DESCRIPTION OF EMBODIMENTS

The following describes embodiments of this application with reference to accompanying drawings in embodiments of this application.

Electrolytes, positive and negative electrode materials, and the like in sodium-ion batteries all affect low-temperature performance of the sodium-ion batteries. However, currently, it is still unclear how to design an association relationship between an electrolyte and positive and negative electrode materials to better exploit low-temperature characteristics of the sodium-ion batteries while also considering high-temperature performance. In view of this, embodiments of this application provide a sodium-ion battery and a power-consuming device. With a proper design of a specific association relationship between D50 particle sizes of positive and negative electrode active materials and an electrolyte solvent, the sodium-ion battery can effectively balance ion transport and ion diffusion capabilities in battery charging and discharging processes, and improve low-temperature kinetics of the battery while also considering high-temperature performance.

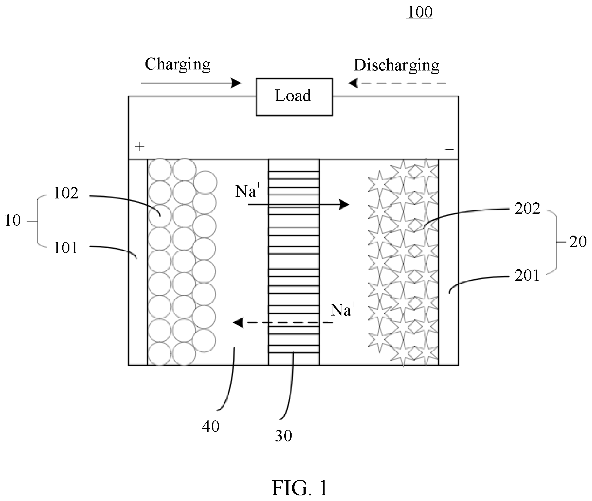

As shown in FIG. 1, an embodiment of this application provides a sodium-ion battery 100. The sodium-ion battery 100 includes a positive electrode 10, a negative electrode 20, a separator 30, and an electrolyte 40. The separator 30 is disposed between the positive electrode 10 and the negative electrode 20, and the electrolyte 40 is filled between the positive electrode 10 and the negative electrode 20 and infiltrates the separator 30. The positive electrode 10 includes a positive electrode active material 102, the negative electrode 20 includes a negative electrode active material 202, the electrolyte 40 includes an electrolyte salt and an organic solvent, and the organic solvent includes a cyclic carbonate solvent and/or a carboxylic ester solvent.

A numerical ratio of a mass fraction of the cyclic carbonate solvent in the electrolyte 40 to a sum of a D50 particle size of the positive electrode active material 102 and a D50 particle size of the negative electrode active material 202 is 0.005:1 to 0.2:1. A numerical ratio of a mass fraction of the carboxylic ester solvent in the electrolyte 40 to the sum of the D50 particle size of the positive electrode active material 102 and the D50 particle size of the negative electrode active material 202 is 0.002:1 to 0.1:1. A unit of the D50 particle sizes is µm.

When the sodium-ion battery 100 is being charged, sodium ions are deintercalated from the positive electrode active material 102 of the positive electrode 10, and are intercalated into the negative electrode active material 202 of the negative electrode 20 after passing through the electrolyte 40. When the sodium-ion battery 100 is being discharged, sodium ions are deintercalated from the negative electrode active material 202, and are intercalated into the positive electrode active material 102 after passing through the electrolyte 40. When the positive and negative electrode active materials and the electrolyte solvent of the sodium-ion battery 100 meet the foregoing conditions, ion transport and ion diffusion capabilities in battery charging and discharging processes can be effectively balanced, and low-temperature kinetics of the battery can be improved while high-temperature performance is also considered, thereby obtaining a sodium-ion battery product with both good low-temperature performance and excellent high-temperature performance, and further improving market competitiveness of power-consuming devices such as electronic devices and electric vehicles.

The D50 particle size is a particle size corresponding to a point at which a cumulative particle size distribution percentage of a sample reaches 50%. D50 is also referred to as a median diameter or a median particle size.

The inventor of this application finds that, in the sodium-ion battery 100, particle sizes of the positive and negative electrode active materials and a solvent system of the electrolyte play important roles in the low-temperature performance of the battery. However, if the particle sizes of the positive and negative electrode active materials or the solvent system of the electrolyte is adjusted or changed in isolation, performance of the battery in other aspects such as the high-temperature performance deteriorates. According to the sodium-ion battery provided in embodiments of this application, an association relationship is established between the D50 particle sizes of the positive and negative electrode active materials and the electrolyte solvent, and the numerical ratio of the mass fraction of the cyclic carbonate solvent in the electrolyte to the sum of the D50 particle size of the positive electrode active material and the D50 particle size of the negative electrode active material is controlled within an appropriate specific range, and the numerical ratio of the mass fraction of the carboxylic ester solvent in the electrolyte to the sum of the D50 particle size of the positive electrode active material and the D50 particle size of the negative electrode active material is controlled within an appropriate specific range. In this way, physical properties such as viscosity and conductivity of the electrolyte can be properly controlled, ion transport and ion diffusion capabilities in battery charging and discharging processes can be effectively balanced, and low-temperature kinetics of the positive and negative electrode active materials can be improved while high-temperature performance is also considered, thereby obtaining a sodium-ion battery with both good low-temperature performance and excellent high-temperature performance.

It should be noted that the numerical ratio of the mass fraction of the cyclic carbonate solvent in the electrolyte to the sum of the D50 particle size of the positive electrode active material and the D50 particle size of the negative electrode active material is a numerical ratio calculated without considering the unit of the D50 particle sizes. For example, if the mass fraction of the cyclic carbonate solvent is 30%, the D50 particle size of the positive electrode active material is 5 µm, and the D50 particle size of the negative electrode active material is 5 µm, the numerical ratio is 30%/(5 + 5) = 0.03.

Similarly, the numerical ratio of the mass fraction of the carboxylic ester solvent in the electrolyte to the sum of the D50 particle size of the positive electrode active material and the D50 particle size of the negative electrode active material is also a numerical ratio calculated without considering the unit of the D50 particle sizes. For example, if the mass fraction of the carboxylic ester solvent is 10%, the D50 particle size of the positive electrode active material is 5 µm, and the D50 particle size of the negative electrode active material is 5 µm, the numerical ratio is 10%/(5 + 5) = 0.01.

In this application, the numerical ratio of the mass fraction of the cyclic carbonate solvent in the electrolyte 40 to the sum of the D50 particle size of the positive electrode active material 102 and the D50 particle size of the negative electrode active material 202 is 0.005:1 to 0.2:1. The cyclic carbonate solvent has a high dielectric constant, which is conducive to sodium salt dissociation, increases the conductivity of the electrolyte, and facilitates ion transport. In addition, the cyclic carbonate solvent has a wide liquid temperature range, a strong dissolution capability, high security, and high stability, which helps improve the low-temperature performance of the sodium-ion battery. Moreover, the numerical ratio of the mass fraction of the cyclic carbonate solvent in the electrolyte to the sum of the D50 particle size of the positive electrode active material and the D50 particle size of the negative electrode active material is controlled within an appropriate range, so that the cyclic carbonate solvent can be used to improve the low-temperature performance while better considering the high-temperature performance of the battery. In this way, the electrolyte as a whole has appropriate conductivity and obtains a strong ion transport capability. In some embodiments, the numerical ratio is specifically, for example, 0.005:1, 0.006:1, 0.007:1, 0.008:1, 0.009:1, 0.01:1, 0.015:1, 0.02:1, 0.025:1, 0.03:1, 0.035:1, 0.04:1, 0.045:1, 0.05:1, 0.06:1, 0.07:1, 0.08:1, 0.09:1, 0.1:1, 0.12:1, 0.15:1, 0.18:1, 0.2:1, or a number between any two of the foregoing values. These values all fall within a desirable range. For example, the numerical ratio may be a value between 0.005:1 and 0.02:1, a value between 0.01:1 and 0.07:1, a value between 0.03:1 and 0.1:1, a value between 0.08:1 and 0.2:1, or a value between any other two values. In some implementations of this application, the numerical ratio of the mass fraction of the cyclic carbonate solvent in the electrolyte 40 to the sum of the D50 particle size of the positive electrode active material 102 and the D50 particle size of the negative electrode active material 202 is 0.01:1 to 0.1:1.

In this application, the numerical ratio of the mass fraction of the carboxylic ester solvent in the electrolyte 40 to the sum of the D50 particle size of the positive electrode active material 102 and the D50 particle size of the negative electrode active material 202 is 0.002:1 to 0.1:1. The carboxylic ester solvent has a low freezing point, a low melting point, and low viscosity, which are conducive to improving the low-temperature performance of the sodium-ion battery. The numerical ratio of the mass fraction of the carboxylic ester solvent in the electrolyte to the sum of the D50 particle size of the positive electrode active material and the D50 particle size of the negative electrode active material is controlled within an appropriate range, so that the carboxylic ester solvent can be used to improve the low-temperature performance while better considering high-temperature performance of the battery. In some embodiments, the numerical ratio is specifically, for example, 0.002:1, 0.003:1, 0.004:1, 0.005:1, 0.006:1, 0.007:1, 0.008:1, 0.009:1, 0.01:1, 0.015:1, 0.02:1, 0.025:1, 0.03:1, 0.035:1, 0.04:1, 0.045:1, 0.05:1, 0.06:1, 0.07:1, 0.08:1, 0.09:1, 0.1:1, or a number between any two of the foregoing values. These values all fall within a desirable range. For example, the numerical ratio may be a value between 0.002:1 and 0.02:1, a value between 0.01:1 and 0.06:1, a value between 0.04:1 and 0.08:1, a value between 0.07:1 and 0.1:1, or a value between any other two values. In some implementations of this application, the numerical ratio of the mass fraction of the carboxylic ester solvent in the electrolyte 40 to the sum of the D50 particle size of the positive electrode active material 102 and the D50 particle size of the negative electrode active material 202 is 0.005:1 to 0.05:1.

It should be noted that, in actual testing operations, a specific measurement and testing system error may be allowed for calculated values of the foregoing numerical ratios, and values within a system error range may be deemed to fall within the scope defined by embodiments of this application.

In an implementation of this application, the cyclic carbonate solvent includes but is not limited to one or more of ethylene carbonate (EC) and propylene carbonate (PC). In some embodiments, the cyclic carbonate solvent in the electrolyte includes only ethylene carbonate (EC). In some embodiments, the cyclic carbonate solvent in the electrolyte includes only propylene carbonate (PC). In some embodiments, the cyclic carbonate solvent in the electrolyte includes both ethylene carbonate (EC) and propylene carbonate (PC). The propylene carbonate (PC) has a comparatively wider liquid temperature range, and addition of the propylene carbonate (PC) to the electrolyte is more conducive to achieving both the low-temperature performance and the high-temperature performance.

In an implementation of this application, a mass percentage of the cyclic carbonate solvent in the electrolyte may be 10% to 40%. Addition of an appropriate amount of the cyclic carbonate solvent to the electrolyte helps leverage advantages of the cyclic carbonate solvent to increase the conductivity of the electrolyte and improve the ion transport capability, thereby improving the low-temperature performance of the battery, and also enabling the cyclic carbonate solvent to cooperate with another solvent to better improve comprehensive performance of the battery. In some embodiments, for example, the mass percentage of the cyclic carbonate solvent in the electrolyte is 10%, 15%, 20%, 25%, 30%, 35%, or 40%.

In some implementations of this application, a mass percentage of the ethylene carbonate in the electrolyte is 0% to 20%, and may be specifically, for example, 0%, 1%, 5%, 8%, 10%, 12%, 14%, 15%, 18%, or 20%, and a mass percentage of the propylene carbonate in the electrolyte is 10% to 40%, and may be specifically, for example, 10%, 12%, 15%, 16%, 20%, 22%, 25%, 28%, 30%, 32%, 35%, 38%, or 40%.

In an implementation of this application, the carboxylic ester solvent includes but is not limited to one or more of methyl formate (MA), ethyl formate, methyl acetate (EA), ethyl acetate, propyl acetate (EP), ethyl propionate, propyl propionate (PP), methyl difluoroacetate, and methyl trifluoroacetate.

In an implementation of this application, a mass percentage of the carboxylic ester solvent in the electrolyte may be 5% to 25%. Addition of an appropriate amount of the carboxylic ester solvent to the electrolyte helps leverage advantages of the carboxylic ester solvent to improve low-temperature kinetics, thereby improving the low-temperature performance of the battery, and also enabling the carboxylic ester solvent to cooperate with another solvent to better improve the comprehensive performance of the battery. In some embodiments, the mass percentage of the carboxylic ester solvent in the electrolyte is, for example, 5%, 8%, 10%, 12%, 15%, 18%, 20%, 22%, or 25%.

In some implementations of this application, the organic solvent further includes a linear carbonate solvent. Addition of the linear carbonate solvent helps reduce the viscosity of the electrolyte and improve the ion transport capability of the electrolyte. In an implementation of this application, a mass percentage of the linear carbonate solvent in the electrolyte may be 20% to 50%. Addition of an appropriate amount of the linear carbonate solvent helps the electrolyte obtain appropriate viscosity, and enables the linear carbonate solvent to better improve comprehensive performance of the electrolyte together with another solvent such as the cyclic carbonate solvent or the carboxylic ester solvent. In some embodiments, the mass percentage of the linear carbonate solvent in the electrolyte is, for example, 20%, 22%, 25%, 28%, 30%, 32%, 35%, 38%, 40%, 42%, 45%, 48%, or 50%. In some implementations, the mass percentage of the linear carbonate solvent in the electrolyte may be 30% to 50%.

In an implementation of this application, the linear carbonate solvent includes but is not limited to one or more of diethyl carbonate (DEC), ethyl methyl carbonate (EMC), and dimethyl carbonate (DMC). In some implementations of this application, a mass percentage of the diethyl carbonate in the electrolyte is 0% to 40%, for example, may be 0%, 2%, 5%, 8%, 10%, 12%, 15%, 20%, 25%, 30%, 35%, or 40%; a mass percentage of the ethyl methyl carbonate in the electrolyte is 0% to 40%, for example, may be 0%, 5%, 10%, 12%, 15%, 20%, 22%, 25%, 28%, 30%, 32%, 35%, 38%, or 40%; and a mass percentage of the dimethyl carbonate in the electrolyte is 0% to 20%, for example, may be 0%, 2%, 5%, 8%, 10%, 12%, 15%, or 20%. In some embodiments, the linear carbonate solvent in the electrolyte includes both diethyl carbonate (DEC) and ethyl methyl carbonate (EMC). In some embodiments, the mass percentage of the diethyl carbonate in the electrolyte is 5% to 20%, and the mass percentage of the ethyl methyl carbonate in the electrolyte is 20% to 40%.

In some implementations of this application, the organic solvent further includes an ether solvent. A stable solvation structure of the ether solvent can implement a highly reversible solvent-co-intercalation reaction, and form a thin and stable SEI film (Solid Electrolyte Interphase, solid electrolyte interphase film). This is conducive to stable electrode cycling and fast sodium storage kinetics. In an implementation of this application, a mass percentage of the ether solvent in the electrolyte may be less than or equal to 20%. In some embodiments, the mass percentage of the ether solvent in the electrolyte is, for example, 0%, 2%, 5%, 8%, 10%, 12%, 15%, or 20%.

In an implementation of this application, the ether solvent includes but is not limited to one or more of tetrahydrofuran, 2-methyltetrahydrofuran, 1,3-dioxolane, dimethoxymethane, 1,2-dimethoxyethane, diethylene glycol dimethyl ether, 1,1,2,2-tetrafluoroethyl-2,2,3,3-tetrafluoropropyl ether, and bis(2,2,2-trifluoroethyl) ether.

It may be understood that a specific measurement and testing error may be allowed for values of the mass percentages of the foregoing solvents. This is because, following actual battery formation, capacity grading, or cycling, formation of the interphase film may affect testing of the mass percentages of the electrolyte solvents to some extent. Therefore, values within an error range may be deemed to fall within the scope defined by embodiments of this application. Alternatively, if a value range, of a mass percentage of an electrolyte solvent, that is obtained from a test after formation, capacity grading, or cycling remains within the foregoing range, the value range may be deemed to fall within the scope defined by embodiments of this application.

In an implementation of this application, the electrolyte further includes an additive, and the additive includes but is not limited to at least one of a sodium salt additive and an organic additive. Addition of the sodium salt additive can improve film formation quality of the SEI film of the negative electrode, and reduce contact between the negative electrode and the electrolyte. Addition of the organic additive helps form a layer of quality SEI film on a surface of the negative electrode of the sodium-ion battery, thereby effectively protecting the negative electrode and ensuring uniform and rapid migration of sodium ions on an interface. In some embodiments, the additive includes both the sodium salt additive and the organic additive. In this way, the sodium salt additive has a high reductive film-forming potential, and may react with the negative electrode prior to the organic additive, to passivate a surface of the negative electrode, so that film formation quality of the organic additive on the surface of the negative electrode is improved, thereby effectively avoiding continuous cracking and dissolution of the SEI film in a cycling process, reducing the contact between the negative electrode and the electrolyte, and reducing a side reaction probability.

In an implementation of this application, the sodium salt additive includes but is not limited to one or more of sodium bis(oxalato)borate (NaBOB), sodium difluoro(oxalato)borate (NaDFOB), sodium difluorobis(oxalato)phosphate (NaDFOP), and sodium difluorophosphate (NaPO₂F₂). In an implementation of this application, a mass percentage of the sodium salt additive in the electrolyte may be 0.05% to 3%. In some embodiments, the mass percentage of the sodium salt additive in the electrolyte may be, for example, 0.05%, 0.08%, 0.1%, 0.2%, 0.5%, 0.7%, 0.9%, 1.0%, 1.2%, 1.4%, 1.5%, 1.6%, 1.8%, 2.0%, 2.2%, 2.5%, 2.7%, or 3%. Addition of an appropriate amount of the sodium salt additive to the electrolyte helps better improve the comprehensive performance of the battery.

In an implementation of this application, the organic additive includes but is not limited to one or more of a sulfur-containing ester compound, a fluorinated carbonate compound, a nitrile compound, and an acid anhydride compound. In an implementation of this application, the sulfur-containing ester compound includes but is not limited to one or more of dimethyl sulfite, diethyl sulfite, ethylene sulfite, ethylene sulfate (DTD), propylene sulfate (TS), methylene methanedisulfonate (MMDS), 1,3-propane sultone (PS), 1,3-propene sultone (PST), 1,4-butane sultone (BS), dimethyl sulfate, diethyl sulfate, and 4-methyl ethylene sulfate. In an implementation of this application, the fluorinated carbonate compound includes but is not limited to one or more of fluoroethylene carbonate (FEC) and difluoroethylene carbonate (DFEC). In an implementation of this application, the nitrile compound includes but is not limited to a mononitrile compound and/or a polynitrile compound. The mononitrile compound includes but is not limited to at least one of acetonitrile and p-methylbenzonitrile. The polynitrile compound includes but is not limited to one or more of succinonitrile (SN), glutaronitrile, adiponitrile, 1,2-bis(2-cyanoethoxy)ethane (DENE), 1,3,6-hexanetricarbonitrile (HTCN), and 1,4-dicyano-2-butene. In an implementation of this application, the acid anhydride compound includes but is not limited to one or more of succinic anhydride (SA), glutaric anhydride, adipic anhydride, maleic anhydride, cyclic phosphate anhydride (CA), and 1-butyl phosphate anhydride.

In an implementation of this application, a mass percentage of the organic additive in the electrolyte may be 0.1% to 15%. In some embodiments, the mass percentage of the organic additive in the electrolyte may be 0.1% to 15%, for example, may be 0.1%, 0.5%, 1%, 2%, 3%, 4%, 5%, 6%, 7%, 8%, 9%, 10%, 11%, 12%, 13%, 14%, or 15%. Addition of an appropriate amount of the organic additive to the electrolyte helps better improve the comprehensive performance of the battery.

In some implementations of this application, a mass percentage of the sulfur-containing ester compound in the electrolyte is 0.5% to 5%, for example, may be 0.5%, 1.0%, 2.0%, 3.0%, 4.0%, or 5.0%. In some implementations of this application, a mass percentage of the fluorinated carbonate compound in the electrolyte is 0.5% to 5%, for example, may be 0.5%, 1.0%, 2.0%, 3.0%, 4.0%, or 5.0%. In some implementations of this application, a mass percentage of the nitrile compound in the electrolyte is 0.5% to 5%, for example, may be 0.5%, 1.0%, 2.0%, 3.0%, 4.0%, or 5.0%. In some implementations of this application, a mass percentage of the acid anhydride compound in the electrolyte is 0.05% to 1%, for example, may be 0.05%, 0.1%, 0.2%, 0.4%, 0.6%, 0.8%, or 1.0%. In some embodiments, the organic additive added to the electrolyte includes two types: the sulfur-containing ester compound and the fluorinated carbonate compound. In some embodiments, the organic additive added to the electrolyte includes three types: the sulfur-containing ester compound, the fluorinated carbonate compound, and the nitrile compound. In some embodiments, the organic additive added to the electrolyte includes three types: the sulfur-containing ester compound, the fluorinated carbonate compound, and the acid anhydride compound. In some embodiments, the organic additive added to the electrolyte includes four types: the sulfur-containing ester compound, the fluorinated carbonate compound, the nitrile compound, and the acid anhydride compound.

In an implementation of this application, in the electrolyte, a molar concentration of the electrolyte salt is 0.05 mol/L to 5 mol/L. In some embodiments, in the electrolyte, the molar concentration of the electrolyte salt may be, for example, 0.05 mol/L, 0.1 mol/L, 0.5 mol/L, 0.8 mol/L, 1.0 mol/L, 1.2 mol/L, 1.5 mol/L, 1.8 mol/L, 2.0 mol/L, 3.0 mol/L, 4.0 mol/L, or 5.0 mol/L. The electrolyte salt includes but is not limited to one or more of NaClO₄, NaBF₄, NaPF₆, NaAsF₆, NaCF₃SO₃, 4,5-dicyano-2-(trifluoromethyl)imidazolate (NaTDI), Na[(CF₃SO₂)₂N], Na[(FSO₂)₂N], and Na[(CₘF₂ₘ₊₁SO₂)(CₙF₂ₙ₊₁SO₂)N], where m and n are natural numbers.

In the sodium-ion battery 100, the electrolyte 40 is a transport medium through which sodium ions are transported between the positive electrode 10 and the negative electrode 20. In the electrolyte 40, both the electrolyte salt and the additive are dissolved in the organic solvent.

As shown in FIG. 1, in some implementations of this application, the positive electrode 10 includes a positive electrode current collector 101 and a positive electrode material layer disposed on a surface of the positive electrode current collector 101. The positive electrode current collector 101 may be a metal foil, for example, an aluminum foil, a gold foil, or a platinum foil. The positive electrode material layer includes the positive electrode active material 102, and sodium ions can be reversibly intercalated into/deintercalated from the positive electrode active material 102. In an implementation of this application, the positive electrode active material 102 may include at least one of a layered sodium transition metal oxide, a Prussian blue (white) compound, and a sodium polyanionic compound. The positive electrode active material may be one of or a combination of a plurality (two or more) of the foregoing materials. Each of the layered sodium transition metal oxide positive electrode material and the Prussian blue (white) compound positive electrode material has a high specific capacity. The sodium polyanionic compound has high electrochemical reaction stability. In an embodiment of this application, the layered sodium transition metal oxide may be, for example, sodium nickel iron manganese oxide (NaNi_{1/3}Fe_{1/3}Mn_{1/3}O₂, NFM for short); the Prussian blue (white) compound may be, for example, Prussian white (Na₂Mn[Fe(CN)₆], PBA for short); and the sodium polyanionic compound may be, for example, sodium iron phosphate (NaFePO₄, NFP for short) or sodium ferric sulfate (Na₂Fe₂(SO₄)₃, NFS for short). In some embodiments of this application, the positive electrode active material includes at least one of sodium nickel iron manganese oxide, Prussian white, sodium iron phosphate, and sodium ferric sulfate.

In an implementation of this application, the D50 particle size of the positive electrode active material is 0.7 µm to 20 µm. An appropriate particle size helps improve electrochemical performance of the battery. The D50 particle size of the positive electrode active material may be, for example, 0.7 µm, 1 µm, 2 µm, 4 µm, 6 µm, 8 µm, 10 µm, 12 µm, 14 µm, 15 µm, 16 µm, 18 µm, 20 µm, or a number between any two of the foregoing values. In some implementations, the D50 particle size of the positive electrode active material is 2 µm to 10 µm. It may be understood that a specific measurement and testing error may be allowed for a value of the foregoing D50. This is because, following actual battery formation, capacity grading, or cycling, formation of the interphase film may affect testing of a median particle size of a material to some extent. Therefore, values within an error range may be deemed to fall within the scope defined by embodiments of this application. Alternatively, if a value range, of a median particle size, that is obtained from a material test after formation, capacity grading, or cycling remains within the foregoing range, the value range may be deemed to fall within the scope defined by embodiments of this application.

In an implementation of this application, in addition to the positive electrode active material 102, the positive electrode material layer may further include components such as a specific amount of binder and a specific amount of conductive agent. The binder may be, for example, polyvinylidene fluoride (poly 1,1-difluoroethylene, PVDF). The conductive agent may be, for example, conductive carbon black Super P, amorphous carbon, carbon nanotubes, carbon fibers, or graphene. The binder and the conductive agent are merely examples for description, and are not limited thereto.

As shown in FIG. 1, in some implementations of this application, the negative electrode 20 includes a negative electrode current collector 201 and a negative electrode material layer disposed on a surface of the negative electrode current collector 201. The negative electrode current collector 201 may be a metal foil, for example, a copper foil, an aluminum foil, a gold foil, or a platinum foil. The negative electrode material layer includes the negative electrode active material 202, and sodium ions may be received and released from the negative electrode active material 202. In some embodiments of this application, the negative electrode active material 202 includes a carbon material. In an implementation of this application, the carbon material may include one or more of natural graphite, artificial graphite, mesocarbon microbeads (MCMB), hard carbon, soft carbon, and a porous carbon material.

In an implementation of this application, the D50 particle size of the negative electrode active material is 0.7 µm to 20 µm. An appropriate particle size helps improve electrochemical performance of the battery. The D50 particle size of the negative electrode active material may be, for example, 0.7 µm, 1 µm, 2 µm, 4 µm, 6 µm, 8 µm, 10 µm, 12 µm, 14 µm, 15 µm, 16 µm, 18 µm, 20 µm, or a number between any two of the foregoing values. In some implementations, the D50 particle size of the negative electrode active material is 2 µm to 10 µm. It may be understood that a specific measurement and testing error may be allowed for a value of the foregoing D50. This is because, following actual battery formation, capacity grading, or cycling, formation of the interphase film may affect testing of a median particle size of a material to some extent. Therefore, values within an error range may be deemed to fall within the scope defined by embodiments of this application. Alternatively, if a value range, of a median particle size, that is obtained from a material test after formation, capacity grading, or cycling remains within the foregoing range, the value range may be deemed to fall within the scope defined by embodiments of this application.

In an implementation of this application, the negative electrode material layer may further include components such as a specific amount of binder and a specific amount of conductive agent. The binder may be, for example, sodium carboxymethyl cellulose (CMC-Na), styrene butadiene rubber (SBR), polyacrylic acid (PAA), or sodium polyacrylic acid (NaPAA). The conductive agent may be, for example, conductive carbon black Super P, amorphous carbon, carbon nanotubes, carbon fibers, or graphene. The binder and the conductive agent are merely examples for description, and are not limited thereto.

As shown in FIG. 1, in the sodium-ion battery 100, the separator 30 is located between the positive electrode 10 and the negative electrode 20, and is configured to prevent electrons from passing through while enabling sodium ions to pass through. In some embodiments of this application, the separator 30 includes but is not limited to a single-layer polypropylene (polypropylene, PP) separator, a single-layer polyethylene (polyethylene, PE) separator, a double-layer PP/PE separator, a double-layer PP/PP separator, a triple-layer PP/PE/PP separator, and a ceramic-coated PE separator.

A specific shape or type of the sodium-ion battery in embodiments of this application is not limited. The sodium-ion battery may be a square battery, a button battery, a cylindrical battery, a soft pack battery, or the like, or may be a wound battery or a stacked battery.

The sodium-ion battery provided in embodiments of this application may be used in a terminal device, for example, which may be a consumer electronic product like as a mobile phone, a tablet computer, a mobile power supply, a portable computer, a notebook computer, or another wearable or movable electronic device, or may be a device product like a vehicle, an energy storage device, or a base station, to improve product safety and reliability.

An embodiment of this application further provides a preparation method for a sodium-ion battery, including:
providing a positive electrode plate, a negative electrode plate, a separator, and an electrolyte, where the positive electrode plate includes a positive electrode active material, the negative electrode plate includes a negative electrode active material, the electrolyte includes an electrolyte salt and an organic solvent, and the organic solvent includes a cyclic carbonate solvent and/or a carboxylic ester solvent; where
a numerical ratio of a mass fraction of the cyclic carbonate solvent in the electrolyte to a sum of a D50 particle size of the positive electrode active material and a D50 particle size of the negative electrode active material is controlled to be 0.005:1 to 0.2:1; and
a numerical ratio of a mass fraction of the carboxylic ester solvent in the electrolyte to the sum of the D50 particle size of the positive electrode active material and the D50 particle size of the negative electrode active material is controlled to be 0.002:1 to 0.1:1, where a unit of the D50 particle sizes is µm; and
assembling the positive electrode plate, the negative electrode plate, the separator, and the electrolyte to obtain a sodium-ion battery.

It may be understood that for related features in the preparation method, refer to the foregoing descriptions of the sodium-ion battery. Details are not described herein again.

According to the preparation method for a sodium-ion battery provided in embodiments of this application, with a proper design of a specific association relationship between the D50 particle sizes of the positive and negative electrode active materials and the electrolyte solvent, ion transport and ion diffusion capabilities in battery charging and discharging processes can be effectively balanced, and low-temperature kinetics of the battery can be improved while high-temperature performance is also considered, thereby enhancing battery cycling and improving high-temperature storage performance and low-temperature charging performance.

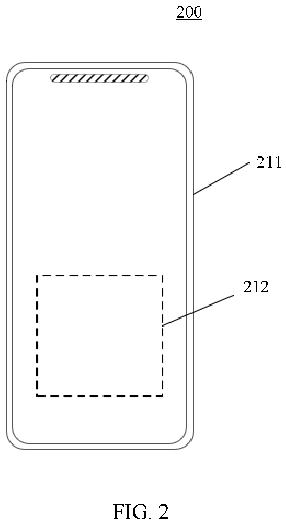

Refer to FIG. 2. An embodiment of this application further provides a power-consuming device 200. The power-consuming device 200 includes a housing 211, and an electronic component and a battery 212 that are accommodated in the housing 211. The battery 212 supplies power to the electronic component. The battery 212 includes the foregoing sodium-ion battery in embodiments of this application. In this application, the power-consuming device 200 may be a consumer electronic product like a mobile phone, a tablet computer, a desktop computer, a notebook computer, a mobile power supply, a portable computer, a smart screen, a display, a sound box, a vehicle-mounted product, or another wearable or movable electronic device (for example, glasses, a watch, a wristband, or a headset), or may be a device product like a vehicle, an energy storage device, or a base station. By using the sodium-ion battery provided in embodiments of this application, product safety and reliability can be improved.

Embodiments of this application are further described below by using a plurality of examples.

The sodium-ion battery in examples and comparative examples below are prepared according to the following method:
Polyvinylidene fluoride (PVDF) with a mass percentage of 2%, a conductive agent Super P with a mass percentage of 2%, and a positive electrode active material with a mass percentage of 96% are weighed and sequentially added to N-methylpyrrolidone (NMP), and are fully stirred and mixed uniformly to obtain slurry. The slurry is coated on an aluminum foil current collector, and is dried, cold pressed, and slit to obtain a positive electrode plate.

CMC-Na with a mass percentage of 1.5%, SBR with a mass percentage of 2.5%, Super P with a mass percentage of 1%, and a negative electrode active material with a mass percentage of 95% are weighed and sequentially added to deionized water, and are fully stirred and mixed uniformly to obtain slurry. The slurry is coated on a copper foil current collector, and is dried, cold pressed, and slit to obtain a negative electrode plate.

Sodium hexafluorophosphate (NaPF₆) is added to an organic solvent, followed by additives of different types and amounts, to obtain an electrolyte, where a molar concentration of NaPF₆ in the electrolyte is 1 mol/L.

The prepared positive electrode plate, the prepared negative electrode plate, and a commercial PE separator are made into a cell. The cell is packaged with a polymer, and the prepared sodium-ion battery electrolyte is poured. A 2 Ah soft-pack sodium-ion battery is prepared after a process such as formation.

Table 1 shows types and D50 particle sizes of the positive electrode active material, types and D50 particle sizes of the negative electrode active material, types and mass percentages of the organic solvent in the electrolyte, and types and mass percentages of the added additives used in the examples and the comparative examples.

Respective performance in the examples and the comparative examples is tested according to the following method, and test results are shown in Table 1.

### 1. Cycling performance test at 45°C:

Sodium-ion batteries prepared in the examples and the comparative examples are placed in an oven with a constant temperature of 45°C±3°C. Then, the batteries are charged at a 0.5C constant current to 3.95 V, and subsequently charged at a constant voltage until the current decreases to 0.05C. After resting for 10 min, the batteries are discharged at a 0.5C constant current to 2.0 V. The above process is repeated for 250 cycles, and discharge capacities in a 1^{st} and 250^{th} cycles are recorded. A capacity retention rate after the 250 cycles is calculated according to the following formula: 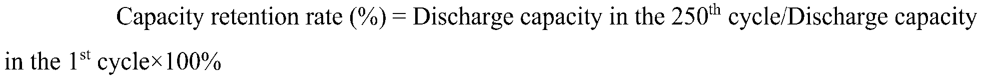 Capacity retention rate (%) = Discharge capacity in the 250th cycle/Discharge capacity in the 1st cycle×100%

### 2. Low-temperature performance test at -40°C:

At an ambient temperature of 25°C±3°C, the batteries are charged at a 0.2C constant current to 3.95 V, and subsequently charged at a constant voltage until the current decreases to 0.05C. After resting for 10 min, the batteries are discharged at a 0.2C constant current to 2.0 V. A discharge capacity obtained under this condition is an initial capacity. The batteries are then stored under a -40°C temperature condition for 4 hours. Afterwards, the batteries are charged again at a 0.2C constant current to 3.95 V, and subsequently charged at a constant voltage until the current decreases to 0.05C. After resting for 10 min, the batteries are discharged at a 0.2C constant current to 2.0 V. A discharge capacity obtained under this condition is a remaining capacity. A remaining capacity retention rate is calculated as follows: Remaining capacity retention rate = (Remaining capacity/Initial capacity) x 100%.

**Table 1 Parameters details and battery performance in Examples 1 to 45 and Comparative Examples 1 to 9**

| | Cyclic carbonat e | Linear carbonat e | Carbox ylic ester | Sodiu m salt additiv e | Sulfurcontai ning ester compo und | Fluori nated carbon ate compo und | Nitril e comp ound | Acid anhy dride comp ound | Positiv e electro de active materi al D50 (µm) | Nega tive electr ode activ e mate rial D50 (µm) | Remaini ng capacity retention rate at a low temperat ure of - 40°C | Capac ity retenti on rate after 250 circles at 45°C |
|---|---|---|---|---|---|---|---|---|---|---|---|---|
| Examp le 1 | 15% (PC) | 50% (10% DEC + 40% EMC) | 20% (EP) | 0.5% (NaDF OB) | 1% (TS) | 1% (FEC) | / | / | 6 (NFM) | 5 (hard carbo n) | 51.9% | 95.8% |
| Examp le 2 | 25% (PC) | 40% (10% DEC + 30% EMC) | 20% (EP) | 0.5% (NaDF OB) | 1% (TS) | 1% (FEC) | / | / | 6 (NFM) | 5 (hard carbo n) | 51.5% | 96.5% |
| Examp le 3 | 35% (PC) | 30% (10% DEC + 20% EMC) | 20% (EP) | 0.5% (NaDF OB) | 1% (TS) | 1% (FEC) | / | / | 6 (NFM) | 5 (hard carbo n) | 51.6% | 96.4% |
| Examp le 4 | 40% (PC) | 30% (10% DEC + 20% EMC) | 15% (EP) | 0.5% (NaDF OB) | 1% (TS) | 1% (FEC) | / | / | 6 (NFM) | 5 (hard carbo n) | 50.9% | 96.2% |
| Examp le 5 | 30% (PC) | 40% (10% DEC + 30% EMC) | 15% (EP) | 0.5% (NaDF OB) | 1% (TS) | 1% (FEC) | / | / | 6 (NFM) | 5 (hard carbo n) | 51.1% | 96.6% |
| Examp le 6 | 30% (PC) | 45% (10% DEC + 35% EMC) | 10% (EP) | 0.5% (NaDF OB) | 1% (TS) | 1% (FEC) | / | / | 6 (NFM) | 5 (hard carbo n) | 50.6% | 96.8% |
| Examp le 7 | 35% (PC) | 45% (10% DEC + 35% EMC) | 5% (EP) | 0.5% (NaDF OB) | 1% (TS) | 1% (FEC) | / | / | 6 (NFM) | 5 (hard carbo n) | 50.2% | 96.1% |
| Examp le 8 | 30% (PC) | 40% (10% DEC + 30% EMC) | 15% (EP) | 1% (0.5% NaDF OB + 0.5% NaPO2 F2) | 1% (TS) | 1% (FEC) | / | / | 6 (NFM) | 5 (hard carbo n) | 51.5% | 97.2% |
| Examp le 9 | 30% (PC) | 40% (10% DEC + 30% EMC) | 15% (EP) | 1% (0.5% NaDF OB + 0.5% NaPO2 F2) | 1% (TS) | 1% (FEC) | / | / | 8 (NFM) | 8 (hard carbo n) | 51.2% | 97.0% |
| Examp le 10 | 15% (PC) | 50% (10% DEC + 40% EMC) | 20% (EP) | 0.5% (NaDF OB) | 1% (TS) | 1% (FEC) | / | / | 8 (NFM) | 8 (hard carbo n) | 50.9% | 95.2% |
| Examp le 11 | 25% (PC) | 40% (10% DEC + 30% EMC) | 20% (EP) | 0.5% (NaDF OB) | 1% (TS) | 1% (FEC) | / | / | 8 (NFM) | 8 (hard carbo n) | 51.4% | 96.4% |
| Examp le 12 | 35% (PC) | 30% (10% DEC + 20% EMC) | 20% (EP) | 0.5% (NaDF OB) | 1% (TS) | 1% (FEC) | / | / | 8 (NFM) | 8 (hard carbo n) | 51.5 | 96.3% |
| Examp le 13 | 40% (PC) | 30% (10% DEC + 20% EMC) | 15% (EP) | 0.5% (NaDF OB) | 1% (TS) | 1% (FEC) | / | / | 8 (NFM) | 8 (hard carbo n) | 50.7% | 96.2% |
| Examp le 14 | 30% (PC) | 40% (10% DEC + 30% EMC) | 15% (EP) | 0.5% (NaDF OB) | 1% (TS) | 1% (FEC) | / | / | 8 (NFM) | 8 (hard carbo n) | 50.9% | 96.5% |
| Examp le 15 | 30% (PC) | 45% (10% DEC + 35% EMC) | 10% (EP) | 0.5% (NaDF OB) | 1% (TS) | 1% (FEC) | / | / | 8 (NFM) | 8 (hard carbo n) | 50.4% | 96.7% |
| Examp le 16 | 35% (PC) | 45% (10% DEC + 35% EMC) | 5% (EP) | 0.5% (NaDF OB) | 1% (TS) | 1% (FEC) | / | / | 8 (NFM) | 8 (hard carbo n) | 50.1% | 96.0% |
| Example 17 | 30% (PC) | 40% (10% DEC + 30% EMC) | 15% (EP) | 0.5% (NaDF OB) | 1% (TS) | 1% (FEC) | / | / | 3 (NFM) | 3 (hard carbo n) | 51.3% | 96.5% |
| Examp le 18 | 30% (PC) | 40% (10% DEC + 30% EMC) | 15% (EP) | 0.5% (NaDF OB) | 1% (TS) | 1% (FEC) | / | / | 15 (NFM) | 15 (hard carbo n) | 50.8% | 96.3% |
| Examp le 19 | 30% (10% EC + 20% PC) | 40% (10% DEC + 30% EMC) | 15% (EP) | 0.5% (NaDF OB) | 1% (TS) | 1% (FEC) | / | / | 6 (NFM) | 5 (hard carbo n) | 51.4% | 96.7% |
| Examp le 20 | 30% (10% EC + 20% PC) | 40% (10% DEC + 30% EMC) | 15% (EP) | 0.5% (NaDF OB) | 1% (TS) | 1% (FEC) | / | / | 8 (NFM) | 8 (hard carbo n) | 51.2% | 96.6% |
| Examp le 21 | 30% (5% EC + 25% PC) | 40% (10% DEC + 30% EMC) | 15% (EP) | 0.5% (NaDF OB) | 1% (TS) | 1% (FEC) | / | / | 8 (NFM) | 8 (hard carbo n) | 51.0% | 96.5% |
| Examp le 22 | 30% (PC) | 40% (10% DEC + 30% EMC) | 15% (EP) | 0.5% (NaDF OB) | 1% (TS) | 1% (FEC) | 1% (SN) | / | 6 (NFM) | 5 (hard carbo n) | 50.5% | 96.5% |
| Examp le 23 | 30% (PC) | 40% (10% DEC + 30% EMC) | 15% (EP) | 0.5% (NaDF OB) | 1% (TS) | 1% (FEC) | / | 0.2% (SA) | 6 (NFM) | 5 (hard carbo n) | 50.7% | 96.6% |
| Examp le 24 | 30% (PC) | 40% (10% DEC + 30% EMC) | 15% (EP) | 0.5% (NaDF OB) | 1% (TS) | 1% (FEC) | 1% (SN) | 0.2% (SA) | 6 (NFM) | 5 (hard carbo n) | 50.4% | 96.5% |
| Examp le 25 | 30% (PC) | 40% (10% DEC + 30% EMC) | 15% (EP) | 0.5% (NaDF OB) | 1% (TS) | 1% (FEC) | | | 6 (NFM) | 5 (soft carbo n) | 51.8% | 96.6% |
| Examp le 26 | 30% (PC) | 40% (10% DEC + 30% EMC) | 15% (EP) | 0.5% (NaDF OB) | 1% (TS) | 1% (FEC) | / | / | 6 (PBA) | 5 (hard carbo n) | 52.2% | 96.4% |
| Examp le 27 | 30% (PC) | 40% (10% DEC + 30% EMC) | 15% (EP) | 1% (0.5% NaDF OB + 0.5% NaPO2 F2) | 1% (TS) | 1% (FEC) | / | / | 6 (PBA) | 5 (hard carbo n) | 52.5% | 96.5% |
| Examp le 28 | 30% (10% EC + 20% PC) | 40% (10% DEC + 30% EMC) | 15% (EP) | 0.5% (NaDF OB) | 1% (TS) | 1% (FEC) | / | / | 6 (PBA) | 5 (hard carbo n) | 52.7% | 96.6% |
| Examp le 29 | 30% (PC) | 40% (10% DEC + 30% EMC) | 15% (EP) | 0.5% (NaDF OB) | 1% (TS) | 1% (FEC) | / | / | 8 (PBA) | 8 (hard carbo n) | 51.8% | 96.2% |
| Examp le 30 | 30% (PC) | 40% (10% DEC + 30% EMC) | 15% (EP) | 0.5% (NaDF OB) | 1% (TS) | 1% (FEC) | / | 0.2% (SA) | 6 (PBA) | 5 (hard carbo n) | 52.0% | 96.8% |
| Examp le 31 | 30% (PC) | 40% (10% DEC + 30% EMC) | 15% (EP) | 0.5% (NaDF OB) | 1% (TS) | 1% (FEC) | / | / | 6 (NFP) | 5 (hard carbo n) | 50.8% | 97.3% |
| Examp le 32 | 30% (PC) | 40% (10% DEC + 30% EMC) | 15% (EP) | 1% (0.5% NaDF OB + 0.5% NaPO2 F2) | 1% (TS) | 1% (FEC) | / | / | 6 (NFP) | 5 (hard carbo n) | 51.0% | 97.5% |
| Examp le 33 | 30% (10% EC + 20% PC) | 40% (10% DEC + 30% EMC) | 15% (EP) | 0.5% (NaDF OB) | 1% (TS) | 1% (FEC) | / | / | 6 (NFP) | 5 (hard carbo n) | 51.2% | 97.4% |
| Examp le 34 | 30% (PC) | 40% (10% DEC + 30% EMC) | 15% (EP) | 0.5% (NaDF OB) | 1% (TS) | 1% (FEC) | / | / | 8 (NFP) | 8 (hard carbo n) | 50.6% | 97.1% |
| Examp le 35 | 30% (PC) | 40% (10% DEC + 30% EMC) | 15% (EP) | 0.5% (NaDF OB) | 1% (TS) | 1% (FEC) | / | / | 6 (NFS) | 5 (hard carbo n) | 50.3% | 96.3% |
| Examp le 36 | 30% (PC) | 40% (10% DEC + 30% EMC) | 15% (EP) | 1% (0.5% NaDF OB + 0.5% NaPO2 F2) | 1% (TS) | 1% (FEC) | / | / | 6 (NFS) | 5 (hard carbo n) | 50.5% | 96.5% |
| Examp le 37 | 30% (10% EC + 20% PC) | 40% (10% DEC + 30% EMC) | 15% (EP) | 0.5% (NaDF OB) | 1% (TS) | 1% (FEC) | / | / | 6 (NFS) | 5 (hard carbo n) | 50.7% | 96.6% |
| Examp le 38 | 30% (PC) | 40% (10% DEC + 30% EMC) | 15% (EP) | 0.5% (NaDF OB) | 1% (TS) | 1% (FEC) | / | / | 8 (NFS) | 8 (hard carbo n) | 50.1% | 96.1% |
| Examp le 39 | 30% (PC) | 40% (10% DEC + 30% EMC) | 15% (EP) | | | | / | / | 6 (NFM) | 5 (hard carbo n) | 47.2% | 95.2% |
| Examp le 40 | 30% (PC) | 40% (10% DEC + 30% EMC) | 15% (EP) | | 1% (TS) | 1% (FEC) | / | / | 6 (NFM) | 5 (hard carbo n) | 47.6% | 95.6% |
| Examp le 41 | 30% (PC) | 40% (10% DEC + 30% EMC) | 15% (EP) | 0.5% (NaDF OB) | | | / | / | 6 (NFM) | 5 (hard carbo n) | 48.2% | 95.3% |
| Examp le 42 | 15% (EC) | 50% (10% DEC + 40% EMC) | 20% (EP) | 0.5% (NaDF OB) | 1% (TS) | 1% (FEC) | / | / | 6 (NFM) | 5 (hard carbo n) | 50.4% | 95.3% |
| Examp le 43 | 25% (PC) | 50% (10% DEC + 40% EMC) | 10% (EP) | | | | / | / | 0.7 (NFM) | 0.7 (hard carbo n) | 46.1% | 94.7% |
| Examp le 44 | 30% (PC) | 45% (10% DEC + 35% EMC) | 10% (EP) | | | | / | / | 20 (NFM) | 20 (hard carbo n) | 45.4% | 94.9% |
| Examp le 45 | 30% (PC) | 40% (10% DEC + 30% EMC) | 15% (EP) | | | | / | / | 1.5 (NFM) | 1.5 (hard carbo n) | 46.8% | 95.0% |
| Comp arative examp le 1 | 30% (PC) | 40% (10% DEC + 30% EMC) | 15% (EP) | 0.5% (NaDF OB) | 1% (TS) | 1% (FEC) | / | / | 0.7 (NFM) | 0.7 (hard carbo n) | 37.1% | 94.0% |
| Comp arative examp le 2 | 15% (PC) | 50% (10% DEC + 40% EMC) | 20% (EP) | 0.5% (NaDF OB) | 1% (TS) | 1% (FEC) | / | / | 20 (NFM) | 20 (hard carbo n) | 37.6% | 94.3% |
| Comp arative examp le 3 | 35% (PC) | 45% (10% DEC + 30% EMC) | 5% (EP) | 0.5% (NaDF OB) | 1% (TS) | 1% (FEC) | / | / | 20 (NFM) | 20 (hard carbo n) | 37.2% | 94.1% |
| Comp arative examp le 4 | 30% (PC) | 40% (10% DEC + 30% EMC) | 15% (EP) | 0.5% (NaDF OB) | 1% (TS) | 1% (FEC) | / | 0.2% (SA) | 0.7 (PBA) | 0.7 (hard carbo n) | 38.3% | 94.3% |
| Comp arative examp le 5 | 15% (PC) | 50% (10% DEC + 40% EMC) | 20% (EP) | 0.5% (NaDF OB) | 1% (TS) | 1% (FEC) | / | 0.2% (SA) | 20 (PBA) | 20 (hard carbo n) | 38.8% | 94.5% |
| Comp arative examp le 6 | 30% (PC) | 40% (10% DEC + 30% EMC) | 15% (EP) | 1% (0.5% NaDF OB + 0.5% NaPO2 F2) | 1% (TS) | 1% (FEC) | / | | 0.7 (NFP) | 0.7 (hard carbo n) | 36.8% | 94.1% |
| Comp arative examp le 7 | 15% (PC) | 50% (10% DEC + 40% EMC) | 20% (EP) | 1% (0.5% NaDF OB + 0.5% NaPO2 F2) | 1% (TS) | 1% (FEC) | / | | 20 (NFP) | 20 (hard carbo n) | 37.5% | 94.5% |
| Comp arative examp le 8 | 30% (PC) | 40% (10% DEC + 30% EMC) | 15% (EP) | 0.5% (NaDF OB) | 1% (TS) | 1% (FEC) | / | | 0.7 (NFS) | 0.7 (hard carbo n) | 40.3% | 94.1% |
| Comp arative examp le 9 | 15% (PC) | 50% (10% DEC + 40% EMC) | 20% (EP) | 0.5% (NaDF OB) | 1% (TS) | 1% (FEC) | / | | 20 (NFS) | 20 (hard carbo n) | 40.9% | 94.5% |

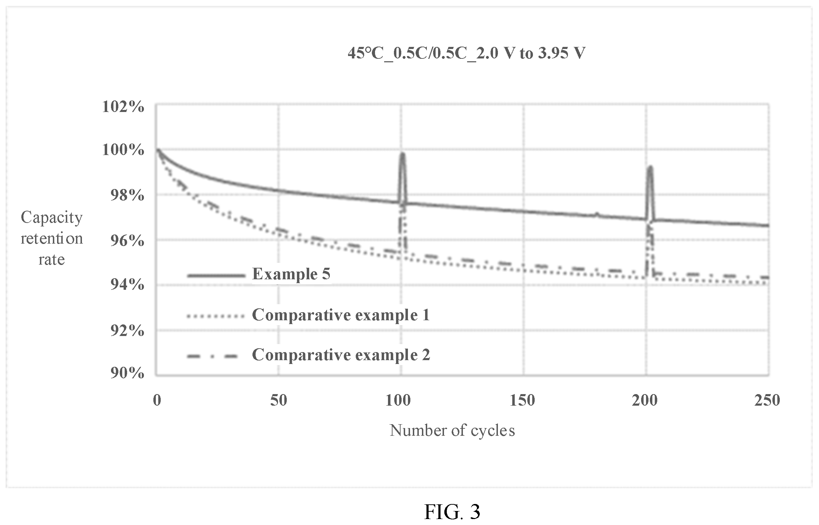

It can be seen from the data in Table 1 that for comparison between the sodium-ion batteries prepared in Examples 1 to 25 and 39 to 45 and Comparative Examples 1 to 3 of this application, the remaining capacity retention rates at the low temperature of -40°C of the sodium-ion batteries obtained in Examples 1 to 25 and 39 to 45 are 45.4% to 51.9%, and the capacity retention rates after 250 circles at 45°C of these batteries are 94.7% to 97.2%. These two types of retention rates are respectively significantly higher than the remaining capacity retention rates at the low temperature of -40°C (37.1% to 37.6%) and the capacity retention rates after 250 circles at 45°C (94.0% to 94.3%) of the sodium-ion batteries obtained in Comparative Examples 1 to 3. This is because, in Examples 1 to 25 and 39 to 45, a numerical ratio of cyclic carbonate to a sum of a median particle size of the positive electrode active material (NFM) and a median particle size of the negative electrode active material (hard carbon and soft carbon) meets 0.005:1 to 0.2:1; and a numerical ratio of carboxylic ester to the sum of the median particle size of the positive electrode active material (NFM) and the median particle size of the negative electrode active material (hard carbon and soft carbon) meets 0.002:1 to 0.1:1. However, the foregoing numerical ratios are not met in Comparative Examples 1 to 3. Specifically, in Example 5, a numerical ratio of a mass percentage of propylene carbonate (PC) in the electrolyte to a sum of a median particle size (D50: 6 µm) of NFM and a median particle size (D50: 5 µm) of hard carbon is 0.027:1; and a numerical ratio of a mass percentage of propyl acetate (EP) in the electrolyte to the sum of the median particle size (D50: 6 µm) of NFM and the median particle size (D50: 5 µm) of hard carbon is 0.014:1. In Comparative Example 1, a numerical ratio of a mass percentage of propylene carbonate (PC) in the electrolyte to a sum of a median particle size (D50: 0.7 µm) of NFM and a median particle size (D50: 0.7 µm) of hard carbon is 0.214:1 (greater than 0.2:1); and a numerical ratio of a mass percentage of propyl acetate (EP) in the electrolyte to the sum of the median particle size (D50: 0.7 µm) of NFM and the median particle size (D50: 0.7 µm) of hard carbon is 0.107:1 (greater than 0.1:1). In Comparative Example 2, a numerical ratio of a mass percentage of propylene carbonate (PC) in the electrolyte to a sum of a median particle size (D50: 20 µm) of NFM and a median particle size (D50: 20 µm) of hard carbon is 0.004:1 (less than 0.005:1). As a result, ion transport and ion diffusion cannot be balanced, and battery performance is poor. FIG. 3 is a diagram of cycling performance comparison between the sodium-ion batteries in Example 5 and Comparative Examples 1 and 2. It can be seen from FIG. 3 that cycling performance after 250 circles at 45°C of the sodium-ion battery in Example 5 is significantly superior to that in Comparative Examples 1 and 2.

From comparison between Example 5 and Examples 39 to 41 and 43 to 45, it can be further learned that, addition of an appropriate amount of the sodium salt additive and/or the organic additive to the electrolyte helps further improve the battery performance. Moreover, addition of both the sodium salt additive and the organic additive helps improve the battery performance.

It can be seen from the data in Table 1 that for comparison between the sodium-ion batteries prepared in Examples 26 to 30 and Comparative Examples 4 and 5 of this application, the remaining capacity retention rates at the low temperature of -40°C of the sodium-ion batteries obtained in Examples 26 to 30 are 51.8% to 52.7%, and the capacity retention rates after 250 circles at 45°C of these batteries are 96.2% to 96.8%. These two types of retention rates are respectively significantly higher than the remaining capacity retention rates at the low temperature of -40°C (38.3% to 38.8%) and the capacity retention rates after 250 circles at 45°C (94.3% to 94.5%) of the sodium-ion batteries obtained in Comparative Examples 4 and 5. This is because, in Examples 26 to 30, a numerical ratio of a mass percentage of cyclic carbonate in the electrolyte to a sum of a median particle size of the positive electrode active material (PBA) and a median particle size of the negative electrode active material (hard carbon) meets 0.005:1 to 0.2:1; and a numerical ratio of a mass percentage of carboxylic ester in the electrolyte to the sum of the median particle size of the positive electrode active material (PBA) and the median particle size of the negative electrode active material (hard carbon) meets 0.002:1 to 0.1:1. However, the foregoing numerical ratios are not met in Comparative Examples 4 and 5. Specifically, in Example 30, a numerical ratio of a mass percentage of propylene carbonate (PC) in the electrolyte to a sum of a median particle size (D50: 6 µm) of PBA and a median particle size (D50: 5 µm) of hard carbon is 0.027:1; and a numerical ratio of a mass percentage of propyl acetate (EP) in the electrolyte to the sum of the median particle size (D50: 6 µm) of PBA and the median particle size (D50: 5 µm) of hard carbon is 0.014:1. In Comparative Example 4, a numerical ratio of a mass percentage of propylene carbonate (PC) in the electrolyte to a sum of a median particle size (D50: 0.7 µm) of PBA and a median particle size (D50: 0.7 µm) of hard carbon is 0.214:1 (greater than 0.2:1); and a numerical ratio of a mass percentage of propyl acetate (EP) in the electrolyte to the sum of the median particle size (D50: 0.7 µm) of PBA and the median particle size (D50: 0.7 µm) of hard carbon is 0.107:1 (greater than 0.1:1). In Comparative Example 5, a numerical ratio of a mass percentage of propylene carbonate (PC) in the electrolyte to a sum of a median particle size (D50: 20 µm) of PBA and a median particle size (D50: 20 µm) of hard carbon is 0.004:1 (less than 0.005:1). As a result, ion transport and ion diffusion cannot be balanced, and battery performance is poor.

It can be seen from the data in Table 1 that for comparison between the sodium-ion batteries prepared in Examples 31 to 34 and Comparative Examples 6 and 7 of this application, the remaining capacity retention rates at the low temperature of -40°C of the sodium-ion batteries obtained in Examples 31 to 34 are 50.6% to 51.2%, and the capacity retention rates after 250 circles at 45°C of these batteries are 97.1% to 97.5%. These two types of retention rates are respectively significantly higher than the remaining capacity retention rates at the low temperature of -40°C (36.8% to 37.5%) and the capacity retention rates after 250 circles at 45°C (94.1% to 94.5%) of the sodium-ion batteries obtained in Comparative Examples 6 and 7. This is because, in Examples 31 to 34, a numerical ratio of a mass percentage of cyclic carbonate in the electrolyte to a sum of a median particle size of the positive electrode active material (NFP) and a median particle size of the negative electrode active material (hard carbon) meets 0.005:1 to 0.2:1; and a numerical ratio of a mass percentage of carboxylic ester in the electrolyte to the sum of the median particle size of the positive electrode active material (NFP) and the median particle size of the negative electrode active material (hard carbon) meets 0.002:1 to 0.1:1. However, the foregoing numerical ratios are not met in Comparative Examples 6 and 7. Specifically, in Example 32, a numerical ratio of a mass percentage of propylene carbonate (PC) in the electrolyte to a sum of a median particle size (D50: 6 µm) of NFP and a median particle size (D50: 5 µm) of hard carbon is 0.027:1; and a numerical ratio of a mass percentage of propyl acetate (EP) in the electrolyte to the sum of the median particle size (D50: 6 µm) of NFP and the median particle size (D50: 5 µm) of hard carbon is 0.014:1. In Comparative Example 6, a numerical ratio of a mass percentage of propylene carbonate (PC) in the electrolyte to a sum of a median particle size (D50: 0.7 µm) of NFP and a median particle size (D50: 0.7 µm) of hard carbon is 0.214:1 (greater than 0.2:1); and a numerical ratio of a mass percentage of propyl acetate (EP) in the electrolyte to the sum of the median particle size (D50: 0.7 µm) of NFP and the median particle size (D50: 0.7 µm) of hard carbon is 0.107:1 (greater than 0.1:1). In Comparative Example 7, a numerical ratio of a mass percentage of propylene carbonate (PC) in the electrolyte to a sum of a median particle size (D50: 20 µm) of NFP and a median particle size (D50: 20 µm) of hard carbon is 0.004:1 (less than 0.005:1). As a result, ion transport and ion diffusion cannot be balanced, and battery performance is poor.

It can be seen from the data in Table 1 that for comparison between the sodium-ion batteries prepared in Examples 35 to 38 and Comparative Examples 8 and 9 of this application, the remaining capacity retention rates at the low temperature of -40°C of the sodium-ion batteries obtained in Examples 31 to 34 are 50.1% to 50.7%, and the capacity retention rates after 250 circles at 45°C of these batteries are 96.1% to 96.6%. These two types of retention rates are respectively significantly higher than the remaining capacity retention rates at the low temperature of -40°C (40.3% to 40.9%) and the capacity retention rates after 250 circles at 45°C (94.1% to 94.5%) of the sodium-ion batteries obtained in Comparative Examples 8 and 9. This is because, in Examples 35 to 38, a numerical ratio of a mass percentage of cyclic carbonate in the electrolyte to a sum of a median particle size of the positive electrode active material (NFS) and a median particle size of the negative electrode active material (hard carbon) meets 0.005:1 to 0.2:1; and a numerical ratio of a mass percentage of carboxylic ester in the electrolyte to the sum of the median particle size of the positive electrode active material (NFS) and the median particle size of the negative electrode active material (hard carbon) meets 0.002:1 to 0.1:1. However, the foregoing numerical ratios are not met in Comparative Examples 8 and 9. Specifically, in Example 35, a numerical ratio of a mass percentage of propylene carbonate (PC) in the electrolyte to a sum of a median particle size (D50: 6 µm) of NFS and a median particle size (D50: 5 µm) of hard carbon is 0.027:1; and a numerical ratio of a mass percentage of propyl acetate (EP) in the electrolyte to the sum of the median particle size (D50: 6 µm) of NFS and the median particle size (D50: 5 µm) of hard carbon is 0.014:1. In Comparative Example 8, a numerical ratio of a mass percentage of propylene carbonate (PC) in the electrolyte to a sum of a median particle size (D50: 0.7 µm) of NFS and a median particle size (D50: 0.7 µm) of hard carbon is 0.214:1 (greater than 0.2:1); and a numerical ratio of a mass percentage of propyl acetate (EP) in the electrolyte to the sum of the median particle size (D50: 0.7 µm) of NFS and the median particle size (D50: 0.7 µm) of hard carbon is 0.107:1 (greater than 0.1:1). In Comparative Example 9, a numerical ratio of a mass percentage of propylene carbonate (PC) in the electrolyte to a sum of a median particle size (D50: 20 µm) of NFS and a median particle size (D50: 20 µm) of hard carbon is 0.004:1 (less than 0.005:1). As a result, ion transport and ion diffusion cannot be balanced, and battery performance is poor.

In conclusion, when other conditions remain unchanged, by controlling the numerical ratios of the mass percentages of the cyclic carbonate solvent and the carboxylic ester solvent of the sodium-ion battery in the electrolyte to the sum of the median particle sizes of the positive and negative electrode active materials to be within an appropriate range, the low-temperature performance of the sodium-ion battery can be improved while the high-temperature performance is also considered.

It should be understood that "first", "second", and various numbers in this specification are merely used for differentiation for ease of description, but are not intended to limit the scope of this application.

In this application, "and/or" describes an association relationship between associated objects, and indicates that three relationships may exist. For example, "A and/or B" may indicate the following three cases: Only A exists, both A and B exist, and only B exists, where A and B may be singular or plural. The character "/" generally indicates an "or" relationship between the associated objects.

In this application, "at least one" means one or more, and "a plurality of" means two or more. "At least one of the following items (pieces)" or a similar expression thereof means any combination of these items, including any combination of singular items (pieces) or plural items (pieces). For example, "at least one of a, b, or c", or "at least one of a, b, and c" may indicate: a, b, c, a-b (namely, a and b), a-c, b-c, or a-b-c, where a, b, and c may be singular or plural.

In this application, "-" indicates a range value, including endpoint values at two ends. For example, a value of a may be 0.5-15. It indicates that the value of a may range from 0.5 to 15, and endpoint values 0.5 and 15 are included.

It should be understood that sequence numbers of the foregoing processes do not mean an execution sequence in various embodiments of this application. Some or all of the steps may be performed in parallel or in sequence. The execution sequence of the processes should be determined based on functions and internal logic of the processes, and should not be construed as any limitation on the implementation processes of embodiments of this application.

## Claims

1. A sodium-ion battery, wherein the sodium-ion battery comprises a positive electrode, a negative electrode, and a separator and an electrolyte that are located between the positive electrode and the negative electrode, the electrolyte comprises an electrolyte salt and an organic solvent, and the organic solvent comprises a cyclic carbonate solvent and/or a carboxylic ester solvent; the positive electrode comprises a positive electrode active material; and the negative electrode comprises a negative electrode active material;
a numerical ratio of a mass fraction of the cyclic carbonate solvent in the electrolyte to a sum of a D50 particle size of the positive electrode active material and a D50 particle size of the negative electrode active material is 0.005:1 to 0.2:1; and
a numerical ratio of a mass fraction of the carboxylic ester solvent in the electrolyte to the sum of the D50 particle size of the positive electrode active material and the D50 particle size of the negative electrode active material is 0.002:1 to 0.1:1, wherein a unit of the D50 particle sizes is µm.

2. The sodium-ion battery according to claim 1, wherein the numerical ratio of the mass fraction of the cyclic carbonate solvent in the electrolyte to the sum of the D50 particle size of the positive electrode active material and the D50 particle size of the negative electrode active material is 0.01:1 to 0.1:1.

3. The sodium-ion battery according to claim 1, wherein the numerical ratio of the mass fraction of the carboxylic ester solvent in the electrolyte to the sum of the D50 particle size of the positive electrode active material and the D50 particle size of the negative electrode active material is 0.005:1 to 0.05:1.

4. The sodium-ion battery according to claim 1, wherein the cyclic carbonate solvent comprises one or more of ethylene carbonate and propylene carbonate; and a mass percentage of the cyclic carbonate solvent in the electrolyte is 10% to 40%.

5. The sodium-ion battery according to claim 4, wherein a mass percentage of the ethylene carbonate in the electrolyte is 0% to 20%, and a mass percentage of the propylene carbonate in the electrolyte is 10% to 40%.

6. The sodium-ion battery according to claim 1, wherein the carboxylic ester solvent comprises one or more of methyl formate, ethyl formate, methyl acetate, ethyl acetate, propyl acetate, ethyl propionate, propyl propionate, methyl difluoroacetate, and methyl trifluoroacetate; and a mass percentage of the carboxylic ester solvent in the electrolyte is 5% to 25%.

7. The sodium-ion battery according to any one of claims 1 to 6, wherein the D50 particle size of the positive electrode active material is 0.7 µm to 20 µm.

8. The sodium-ion battery according to any one of claims 1 to 7, wherein the D50 particle size of the negative electrode active material is 0.7 µm to 20 µm.

9. The sodium-ion battery according to any one of claims 1 to 8, wherein the organic solvent further comprises a linear carbonate solvent.

10. The sodium-ion battery according to claim 9, wherein a mass percentage of the linear carbonate solvent in the electrolyte is 20% to 50%.

11. The sodium-ion battery according to claim 10, wherein the linear carbonate solvent comprises one or more of diethyl carbonate, ethyl methyl carbonate, and dimethyl carbonate; and a mass percentage of the diethyl carbonate in the electrolyte is 0% to 40%, a mass percentage of the ethyl methyl carbonate in the electrolyte is 0% to 40%, and a mass percentage of the dimethyl carbonate in the electrolyte is 0% to 20%.

12. The sodium-ion battery according to any one of claims 9 to 11, wherein the organic solvent further comprises an ether solvent, and a mass percentage of the ether solvent in the electrolyte is less than or equal to 20%.

13. The sodium-ion battery according to claim 12, wherein the ether solvent comprises one or more of tetrahydrofuran, 2-methyltetrahydrofuran, 1,3-dioxolane, dimethoxymethane, 1,2-dimethoxyethane, diethylene glycol dimethyl ether, 1,1,2,2-tetrafluoroethyl-2,2,3,3-tetrafluoropropyl ether, and bis(2,2,2-trifluoroethyl) ether.

14. The sodium-ion battery according to any one of claims 1 to 13, wherein the electrolyte further comprises an additive, and the additive comprises at least one of a sodium salt additive and an organic additive; a mass percentage of the sodium salt additive in the electrolyte is 0.05% to 3%; and a mass percentage of the organic additive in the electrolyte is 0.1% to 15%.

15. The sodium-ion battery according to claim 14, wherein the sodium salt additive comprises one or more of sodium bis(oxalato)borate, sodium difluoro(oxalato)borate, sodium difluorobis(oxalato)phosphate, and sodium difluorophosphate; and the organic additive comprises one or more of a sulfur-containing ester compound, a fluorinated carbonate compound, a nitrile compound, and an acid anhydride compound.

16. The sodium-ion battery according to claim 15, wherein a mass percentage of the sulfur-containing ester compound in the electrolyte is 0.5% to 5%; a mass percentage of the fluorinated carbonate compound in the electrolyte is 0.5% to 5%; a mass percentage of the nitrile compound in the electrolyte is 0.5% to 5%; and a mass percentage of the acid anhydride compound in the electrolyte is 0.05% to 1%.

17. The sodium-ion battery according to claim 15 or 16, wherein the sulfur-containing ester compound comprises one or more of dimethyl sulfite, diethyl sulfite, ethylene sulfite, ethylene sulfate, propylene sulfate, methylene methanedisulfonate, 1,3-propane sultone, 1,3-propene sultone, 1,4-butane sultone, dimethyl sulfate, diethyl sulfate, and 4-methyl ethylene sulfate; the fluorinated carbonate compound comprises one or more of fluoroethylene carbonate and difluoroethylene carbonate; the nitrile compound comprises a mononitrile compound and/or a polynitrile compound; the mononitrile compound comprises at least one of acetonitrile and p-methylbenzonitrile; the polynitrile compound comprises one or more of succinonitrile, glutaronitrile, adiponitrile, 1,2-bis(2-cyanoethoxy)ethane, 1,3,6-hexanetricarbonitrile, and 1,4-dicyano-2-butene; and the acid anhydride compound comprises one or more of succinic anhydride, glutaric anhydride, adipic anhydride, maleic anhydride, cyclic phosphate anhydride, and 1-butyl phosphate anhydride.

18. The sodium-ion battery according to any one of claims 1 to 17, wherein in the electrolyte, a molar concentration of the electrolyte salt is 0.05 mol/L to 5 mol/L; and the electrolyte salt comprises one or more of NaClO₄, NaBF₄, NaPF₆, NaAsF₆, NaCF₃SO₃, sodium 4,5-dicyano-2-(trifluoromethyl)imidazolate (NaTDI), Na[(CF₃SO₂)₂N], Na[(FSO₂)₂N], and Na[(CₘF₂ₘ₊₁SO₂)(CₙF₂ₙ₊₁SO₂)N], wherein m and n are natural numbers.

19. The sodium-ion battery according to any one of claims 1 to 18, wherein the positive electrode active material comprises at least one of a layered sodium transition metal oxide, a Prussian blue (white) compound, and a sodium polyanionic compound.

20. The sodium-ion battery according to any one of claims 1 to 19, wherein the negative electrode active material comprises at least one of natural graphite, artificial graphite, mesocarbon microbeads, hard carbon, soft carbon, and a porous carbon material.

21. A preparation method for a sodium-ion battery, comprising:
providing a positive electrode plate, a negative electrode plate, a separator, and an electrolyte, wherein the positive electrode plate comprises a positive electrode active material, the negative electrode plate comprises a negative electrode active material, the electrolyte comprises an electrolyte salt and an organic solvent, and the organic solvent comprises a cyclic carbonate solvent and/or a carboxylic ester solvent; wherein
a numerical ratio of a mass fraction of the cyclic carbonate solvent in the electrolyte to a sum of a D50 particle size of the positive electrode active material and a D50 particle size of the negative electrode active material is controlled to be 0.005:1 to 0.2:1; and
a numerical ratio of a mass fraction of the carboxylic ester solvent in the electrolyte to the sum of the D50 particle size of the positive electrode active material and the D50 particle size of the negative electrode active material is controlled to be 0.002:1 to 0.1:1, wherein a unit of the D50 particle sizes is µm; and
assembling the positive electrode plate, the negative electrode plate, the separator, and the electrolyte to obtain a sodium-ion battery.

22. A power-consuming device, wherein the power-consuming device comprises a housing, and an electronic component and a battery that are accommodated in the housing, wherein the battery supplies power to the electronic component, and the battery comprises the sodium-ion battery according to any one of claims 1 to 20 or the sodium-ion battery prepared by using the preparation method according to claim 21.
